# EUROPEAN PATENT APPLICATION

(11) **EP 2 903 231 A1**
(43) Date of publication of application: **05.08.2015**
(21) Application number: 15152473.3
(22) Date of filing: 26.01.2015
(51) Int. Cl.: H04L 27/00, H04L 1/00

(54) **Method of selecting modulation and transport block size index table**

(30) Priority: 29.01.2014 US 201461932814 P; 21.01.2015 US 201514602244
(71) Applicant: HTC Corporation, Taoyuan City 330 (TW)
(72) Inventor: Wu, Chih-Yao, 330 Taoyuan City (TW)
(74) Representative: Ljungberg, Robert

(57) **Abstract**

A method for a network includes deciding whether a higher order modulation is supported; transmitting a signaling to a communication device, to indicate whether the higher order modulation is supported; and selecting a first modulation and transport block size (TBS) index table or a second modulation and TBS index table according to whether the higher order modulation is supported; wherein the first modulation and TBS index table and the second modulation and TBS index table includes a plurality of modulation and coding scheme (MCS) indices, and each MCS index is corresponding to a modulation order and a TBS index; wherein adjacent MCS indices corresponding to different modulation orders in the first modulation and TBS index table are corresponding to the same TBS index; wherein the adjacent MCS indices corresponding to different modulation orders in the second modulation and TBS index table are corresponding to different TBS indices.

## Description

### Background of the Invention

### 1. Field of the Invention

The present invention relates to a method for a wireless communication system, and more particularly, to a method of selecting modulation and transport block size (TBS) index table according to whether a higher order modulation is supported in a wireless communication system.

### 2. Description of the Prior Art

A long-term evolution (LTE) system supporting the 3rd Generation Partnership Project (3GPP) Rel-8 standard and/or the 3GPP Rel-9 standard are developed by the 3GPP as a successor of the universal mobile telecommunication system (UMTS) for further enhancing performance of the UMTS to satisfy increasing needs of users. The LTE system includes a new radio interface and a new radio network architecture that provides high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmissions/reception, uplink (UL) multiple-input multiple-output (UL-MIMO), etc. For a UE and an eNB to communicate with each other in the LTE-A system, the UE and the eNB must support standards developed for the LTE-A system, such as the 3GPP Rel-10 standard or later versions.

Small cell deployment with low power transmission nodes (e.g. pico cells, femto cells, etc.) for hotspot zone has drawn a lot of interests on the next generation of wireless systems and standards (e.g. LTE-A). Mobile devices served by the small cell are expected to suffer from low pathloss and therefore enjoy better channel gain. In addition, the small cells have smaller cell coverage compared to the typical base stations. The mobile devices served by the small cells may be expected to have lower spread and frequency-flat wireless channel, therefore. In such a condition, a higher order modulation (e.g. 256 quadrature amplitude nodulation (256QAM)) can be introduced to enjoy the better wireless channel gain.

With the introduction of the higher order modulation, the legacy mapping between modulation and coding scheme (MCS) indices and transport block size (TBS) indices (i.e. modulation and TBS index table) is required to be modified. Thus, how to modify the modulation and TBS index table while maintaining the legacy system structure becomes a topic to be discussed.

### Summary of the Invention

In order to solve the above problem, the present invention provides a method selecting modulation and transport block size (TBS) index table according to whether a higher order modulation is supported in a wireless communication system.

In an aspect, the present invention discloses a method for a network of a wireless communication system, the method comprising deciding whether a higher order modulation is supported; transmitting a signaling to a communication device of the wireless communication system, to indicate whether the higher order modulation is supported; and selecting a first modulation and transport block size (TBS) index table or a second modulation and TBS index table according to whether the higher order modulation is supported; wherein the first modulation and TBS index table and the second modulation and TBS index table include a plurality of modulation and coding scheme (MCS) indices, and each MCS index is corresponding to a modulation order and a TBS index; wherein adjacent MCS indices corresponding to different modulation orders in the first modulation and TBS index table are corresponding to the same TBS index; wherein the adjacent MCS indices corresponding to different modulation orders in the second modulation and TBS index table are corresponding to different TBS indices.

In another aspect, the present invention discloses a method for a communication device of a wireless communication system, the method comprising receiving a signaling from a network of the wireless communication system, wherein the signaling indicates whether a higher order modulation is supported; and selecting a first modulation and transport block size (TBS) index table or a second modulation and TBS index table according to the signaling; wherein the first modulation and TBS index table and the second modulation and TBS index table include a plurality of modulation and coding scheme (MCS) indices, and each MCS index is corresponding to a modulation order and a TBS index; wherein adjacent MCS indices corresponding to different modulation orders in the first modulation and TBS index table are corresponding to the same TBS index; wherein the adjacent MCS indices corresponding to different modulation orders in the second modulation and TBS index table are corresponding to different TBS indices.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a wireless communication system according to an example of the present invention.
FIG. 2 is a schematic diagram of a communication device according to an example of the present invention.
FIG. 3 is a flowchart of a process according to an example of the present invention.
FIG. 4 is a schematic diagram of a modulation and transport block size index
table according to an example of the present invention.
FIG. 5 is a schematic diagram of another modulation and transport block size index table according to an example of the present invention.
FIG. 6 is a flowchart of another process according to an example of the present invention.

### Detailed Description

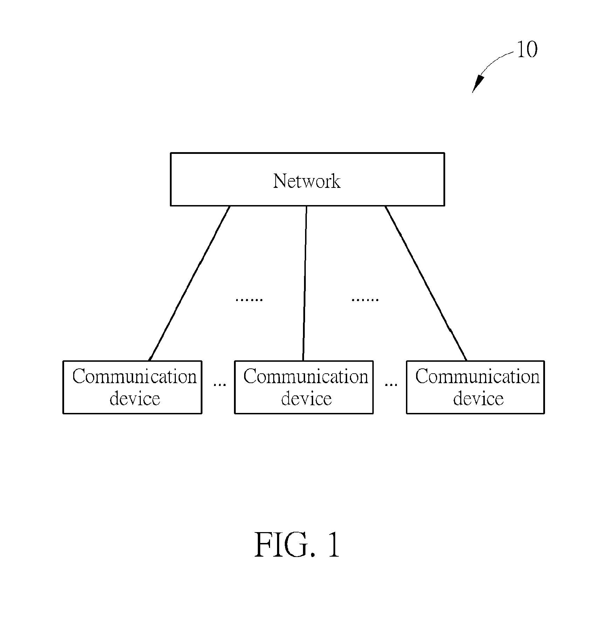

Please refer to Fig. 1, which is a schematic diagram of a wireless communication system 10 according to an example of the present invention. The wireless communication system 10 is briefly composed of a network and a plurality of communication devices. The wireless communication system 10 may support a time-division duplexing (TDD) mode and/or a frequency-division duplexing (FDD) mode. That is, the network and a communication device may communicate with each other via FDD carrier(s) and/or TDD carrier(s). In addition, the wireless communication system 10 may support a carrier aggregation (CA). That is, the network and a communication device may communicate with each other via multiple cells (e.g., multiple carriers) including a primary cell (e.g., primary component carrier) and one or more secondary cells (e.g., secondary component carriers). For example, the primary cell may be a TDD carrier, and a secondary cell may be a FDD carrier. In another example, the primary cell may be the FDD carrier, and the secondary cell may be the TDD carrier. For the CA conforming to the 3GPP LTE Rel-10/11/12, 5 cells (e.g., serving cells) may be supported by the communication device and the network.

In Fig. 1, the network and the communication devices are simply utilized for illustrating the structure of the wireless communication system 10. Practically, the network may be a universal terrestrial radio access network (UTRAN) comprising a plurality of Node-Bs (NBs) in a universal mobile telecommunications system (UMTS). In another example, the network may be an evolved UTRAN (E-UTRAN) comprising a plurality of evolved NBs (eNBs) and/or relays in a long term evolution (LTE) system, a LTE-Advanced (LTE-A) system or an evolution of the LTE-A system.

Furthermore, the network may also include both the UTRAN/E-UTRAN and a core network, wherein the core network includes network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network receives information transmitted by a communication device, the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information may be processed by both the UTRAN/E-UTRAN and the core network, and the decisions are made after coordination and/or cooperation are performed by the UTRAN/E-UTRAN and the core network.

A communication device may be a user equipment (UE), a low cost device (e.g., machine type communication (MTC) device), a device-to-device (D2D) device, a mobile phone, a laptop, a tablet computer, an electronic book, a portable computer system, or combination thereof. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

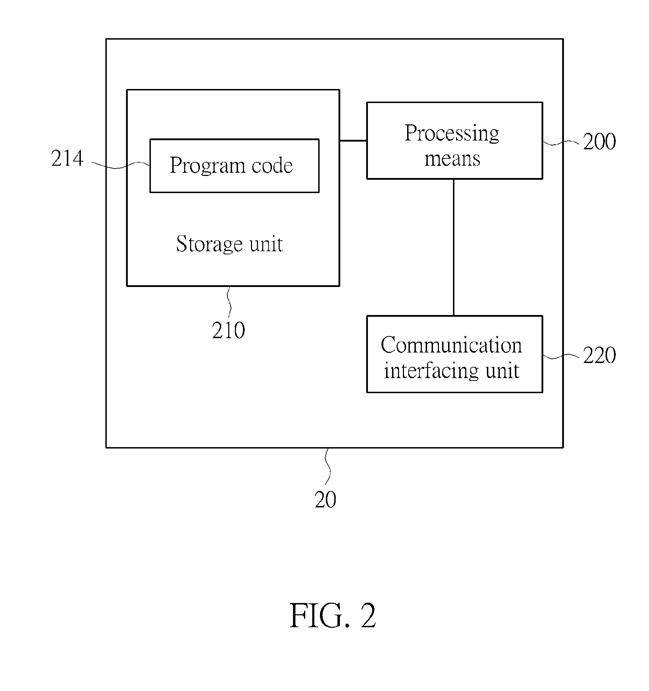

Fig. 2 is a schematic diagram of a communication device 20 according to an example of the present invention. The communication device 20 may be a communication device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, signals, messages and/or packets) according to processing results of the processing means 200.

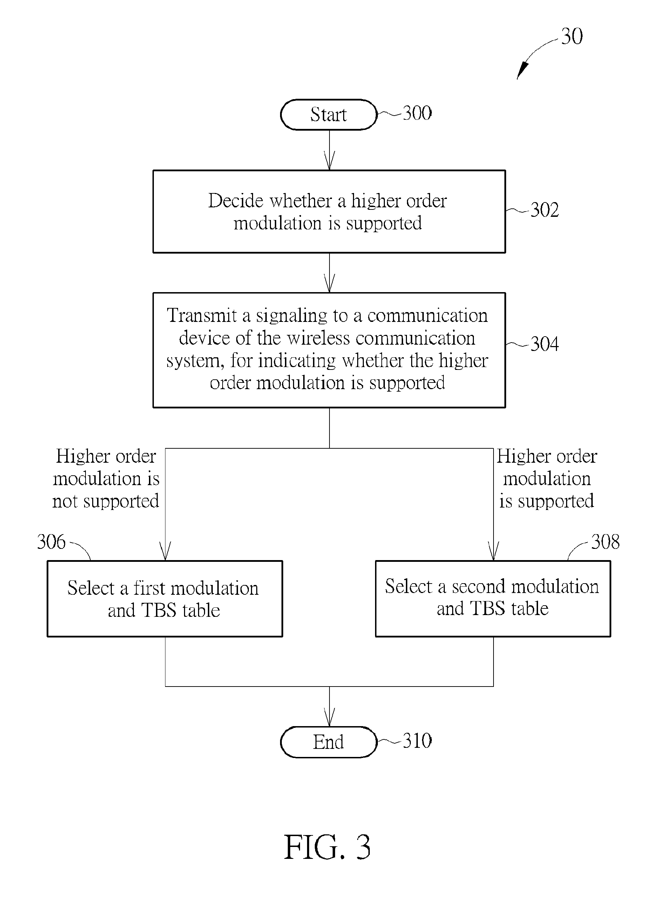

Fig. 3 is a flowchart of a process 30 according to an example of the present invention. The process 30 may be utilized in a wireless communication system (e.g. the wireless communication system 10 shown in Fig. 1), for selecting a modulation and transport block size (TBS) table, wherein the modulation and TBS index table includes a plurality of modulation and coding scheme (MCS) indices, and each MCS index is corresponding to a modulation order and a TBS index. The process 30 may be compiled into the program code 214 and includes the following steps:
Step 300: Start.
Step 302: Decide whether a higher order modulation is supported.
Step 304: Transmit a signaling to a communication device of the wireless communication system, for indicating whether the higher order modulation is supported.
Step 306: Select a first modulation and transport block size (TBS) table when the higher order modulation is not supported.
Step 308: Select a second modulation and TBS table when the higher order modulation is supported.
Step 310: End.

According to the process 30, a network of the wireless communication system decides whether a higher order modulation (e.g. 256 Quadrature Amplitude Modulation (256QAM)) is supported according to the wireless channel quality between the network and a communication device of the wireless communication system. The network may transmit a signaling or a configuration to the communication device of the wireless communication system, to indicate that whether the higher order modulation is supported by a function flag or feature flag. The signaling may be a higher layer message (e.g. a radio resource control (RRC) message) or a dynamic signaling (e.g. bits in downlink control information (DCI) message), and is not limited herein. It should be noted that using the higher order modulation does not prohibit using lower order modulations. For example, when the higher order modulation is not supported, the available modulation formats for the data transmission are QPSK, 16QAM, and 64QAM. When the higher order modulation is supported, the available modulation formats for the data transmission become QPSK, 16QAM, 64QAM, and 256QAM. Next, both the network and the communication device select a first modulation and TBS index table or a second modulation and TBS index table according to whether the higher order modulation is supported. When signaling indicates that the higher order modulation is not supported for the data transmission between the network and the communication device, both the network and the communication device select the first modulation and TBS table, wherein adjacent MCS indices corresponding to different modulation orders in the first modulation and TBS index table are corresponding to the same TBS index (i.e. the same TBS and the same spectral efficiency); and when the signaling indicates that the higher order modulation is supported for the data transmission between the network and the communication device, both the network and the communication device select the second modulation and TBS table, wherein adjacent MCS indices corresponding to different modulation orders in the second modulation and TBS index table are corresponding to different TBS indices. According to the selected modulation and TBS index table, the network and the communication device therefore can perform the following processes of the data transmission. As a result, the higher order modulation is introduced to the wireless communication system and the bit number of indicating the mapping between the MCS indices and the TBS indices can be kept unchanged since one index (one bit) can be saved for each adjacent MCS indices corresponding to different modulation orders.

In detail, the network of the wireless communication system may determine whether the higher order modulation is supported for the data transmissions according to the channel quality between the network and the communication device and transmit the signaling for indicating whether the higher order modulation is supported to the communication device. For example, when the network is a small cell (e.g. a pico cell or a femto cell), the network may utilize the higher order modulation for the data transmission due to the less pathloss and the better wireless channel gain and decide the higher order modulation is supported. When the signaling indicates that the higher order modulation is not supported, both the network and the communication device select the first modulation and TBS index table. In the first modulation and TBS index table, the adjacent MCS indices corresponding to different modulation orders are corresponding to the same TBS index. That is, at the modulation order switching points (i.e. when the adjacent MCS indices corresponding different modulation orders) in the first modulation and TBS index table, the adjacent MCS indices are corresponding to the same TBS index. Note that, the adjacent MCS indices corresponding to the same TBS index should equip with the same resource efficiency due to the same TBS. The MCS index with the lower modulation order at the modulation order switching point should equip with higher code rate and be more suitable for frequency-flat channel and the MCS index with the greater modulation order at the modulation order switching point should have lower code rate and be more suitable for frequency-selective channel. In such a condition, the flexibility of the wireless communication system to the different wireless channel can be improved when the higher order modulation is not supported.

On the other hand, when the signaling indicates that the higher order modulation is supported, both the network and the communication device select the second modulation and TBS index table, wherein the second modulation and TBS index table can be acquired via modifying the first modulation and TBS index table. Since the higher order modulation is supported and the bit number of indicating the mapping between the MCS indices and the TBS indices is expected to be the same, some mappings between the MCS indices and the TBS indices in the first modulation and TBS index table are required to be deleted. As can be seen from the above, there are the adjacent MCS indices corresponding to the same TBS index designed for the flexibility to different wireless channel in the first modulation and TBS index table. When the higher order modulation is supported, the wireless channel quality is expected to be less pathloss and better wireless channel gain. For example, the wireless channel may enjoy better wireless channel gain, less pathloss and be expected to be the frequency-flat channel rather than the frequency-selective channel under the small cell deployment. In such a condition, the flexible design at the modulation order switching points in the first modulation and TBS index table is not necessary. Thus, the MCS index with the greater modulation order among the adjacent MCS indices at each of the modulation order switching points in the first modulation and TBS index table can be deleted and additional MCS indices can be acquired for the higher order modulation. After deleting the MCS index with the greater modulation order among the adjacent MCS indices at each of the modulation order switching points, the adjacent MCS indices at the modulation order switching points are corresponding to different TBS indices in the second modulation and TBS index table. As a result, the bit number for indicating the MCS index in the second modulation and TBS index table is able to remain the same with that for indicating the MCS index in the first modulation and TBS index table when the higher order modulation is supported.

After the adequate modulation and TBS index table is selected, the network utilizes the selected modulation and index table to decide the corresponding MCS bits for indicating the MCS index to the communication device based on the wireless channel quality or the scheduling decision and utilizes the selected modulation and index table and the decided MCS index to decide the modulation order and the TBS of the transmitted data. On the other hand, the communication device utilizes the selected modulation and TBS index table to decode the received MCS index bits and utilizes the selected modulation and TBS index table and the decoded MCS index to decide the modulation order and the TBS of received data. As a result, the higher order modulation is introduced to the wireless communication system and the bit number of indicating the mapping between the MCS indices and the TBS indices can be kept unchanged.

Note that, the second modulation and TBS index table has the mappings corresponding to the higher order modulation. Thus, the number of the modulation orders in the second modulation and TBS index table is greater than that of the modulation orders in the first modulation and TBS index table.

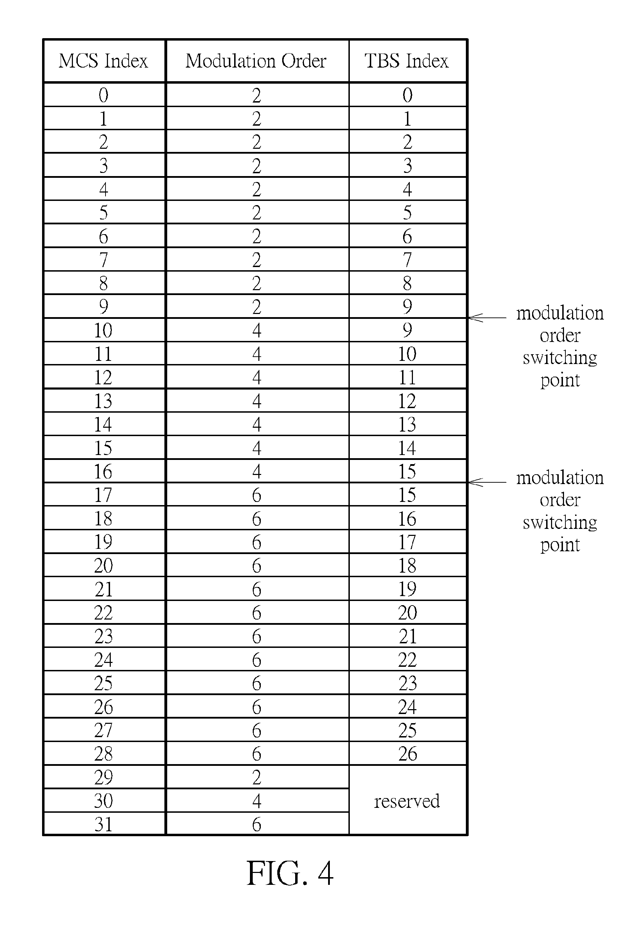

Please refer to FIG. 4, which is schematic diagrams of modulation and TBS index table 40 according to an example of the present invention, wherein the modulation and TBS index table 40 may be the first modulation and TBS index table of the process 30. As shown in FIG. 4, the modulation and TBS index table 40 has 32 different MCS indices indicated by 5 MCS index bits, wherein 3 modulation orders 2, 4, and 6 are supported in the modulation and TBS index table 40. Among the 32 MCS indices, the MCS indices 29, 30 and 31 are utilized for retransmission handling. As can be seen from the modulation and TBS index table 40, a modulation order switching point is between the MCS indices 9 and 10, and the MCS indices 9 and 10 are corresponding to the same TBS index 9 and different modulation orders 2 and 4, respectively. Similarly, another modulation order switching point is between the MCS indices 16 and 17, and the MCS indices 16 and 17 are corresponding to the same TBS index 15 and different modulation orders 4 and 6, respectively. That is, the adjacent MCS indices at the modulation order switching points in the modulation and TBS index table 40 equip the same TBS index.

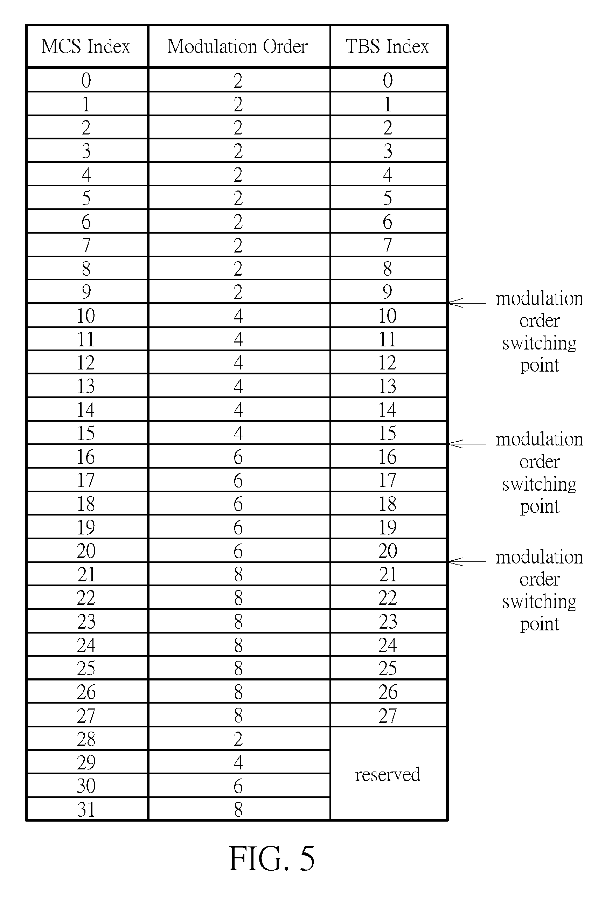

Please refer to FIG. 5, which is schematic diagrams of modulation and TBS index table 50 according to an example of the present invention, wherein the modulation and TBS index table 50 may be the second modulation and TBS index table of the process 30. Similar to the modulation and TBS index table 40 shown in FIG. 4, the modulation and TBS index table 50 has 32 different MCS indices indicated by 5 MCS index bits, wherein 4 modulation orders 2, 4, 6 and 8 are supported in the modulation and TBS index table 50. Since the higher order modulation (i.e. the modulation order 8) is introduced in the modulation and TBS index table 50, an addition MCS index is required for handling the retransmission of the higher order modulation. Thus, the MCS indices 28-31 are utilized for retransmission handling in the modulation and TBS index table 50. As can be seen from FIG. 5, a modulation order switching point exists between the MCS indices 9 and 10, and the MCS indices 9 and 10 are corresponding to different TBS indices 9, 10 and to different modulation orders 2, 4, respectively. Based on the above principle of modifying the first modulation and TBS index table, the MCS index 9 in the modulation and TBS index table 50 and that in the modulation and TBS index table 40 are the same. In other words, the MCS index 10 in the modulation and TBS index table 40 is deleted when acquiring the modulation and TBS index table 50 by modifying the modulation and TBS index table 40. Similarly, the adjacent MCS indices 15, 16 at another modulation order switching point are corresponding to different TBS indices 15, 16, respectively and the adjacent MCS indices 20, 21 at still another modulation order switching point are corresponding to different TBS indices 20, 21. That is, the adjacent MCS indices at each of the modulation order switching points in the modulation and TBS index table 50 are corresponding to the different TBS indices. The MCS bits for indicating the MCS index of data transmission can be kept the same while the higher order modulation is supported.

According to different applications and design concepts, those with ordinary skill in the art may observe appropriate alternations and modifications. For example, the process 30 is not limited to be utilized in the DL transmission as shown in the above examples and can be modified for being utilized in the UL transmission.

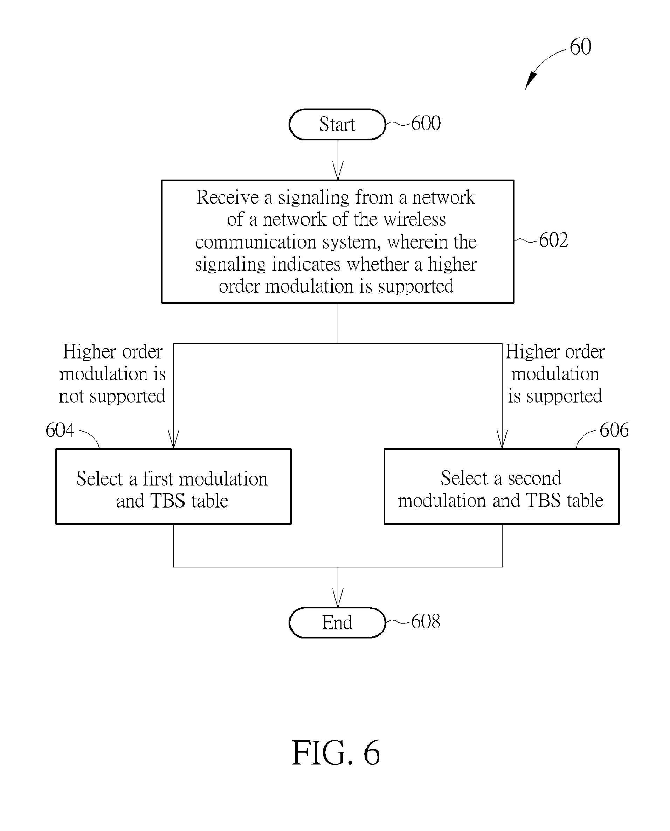

The process of the communication device selecting the modulation and TBS index table in the above example can be summarized into a process 60 shown in FIG. 6. The process 60 may be utilized in a communication device of a wireless communication system (e.g. the wireless communication system 10 shown in Fig. 1), for selecting a modulation and TBS table, wherein the modulation and TBS index table includes a plurality of MCS indices, and each MCS index is corresponding to a modulation order and a TBS index. The process 60 may be compiled into the program code 214 and includes the following steps:
Step 600: Start.
Step 602: Receive a signaling from a network of a network of the wireless communication system, wherein the signaling indicates whether a higher order modulation is supported.
Step 604: Select a first modulation and TBS table when the higher order modulation is not supported.
Step 606: Select a second modulation and TBS table when the higher order modulation is supported.
Step 608: End.

According to the process 60, a communication device of a wireless communication system receives a signaling from a network of the wireless communication system, to determine that whether a higher order modulation (e.g. 256 QAM) is supported. The signaling may be a higher layer message (e.g. a RRC message) or a dynamic signaling (e.g. bits in DCI message), and is not limited herein. Next the communication device selects a first modulation and TBS index table or a second modulation and TBS index table according to the signaling. When the signaling indicates that the higher order modulation is not supported for the data transmission between the network and the communication device, the communication device selects the first modulation and TBS table, wherein adjacent MCS indices at the modulation order switching points in the first modulation and TBS index table are corresponding to the same TBS index; and when the signaling indicates that the higher order modulation is supported for the data transmission between the network and the communication device, the communication device selects the second modulation and TBS table, wherein adjacent MCS indices at the modulation order switching points in the second modulation and TBS index table are corresponding to different TBS indices. After the adequate modulation and TBS index table is selected, the communication device utilizes the selected modulation and TBS index table to decode the received MCS index bits and utilizes the selected modulation and TBS index table and the decoded MCS index to decide the modulation order and the TBS of received data. As a result, the higher order modulation is introduced to the wireless communication system and the bit number of indicating the mapping between the MCS indices and the TBS indices can be kept unchanged.

To sum up, the above example selects the modulation and TBS index table between two modulation and TBS index tables, which are differentiated by whether the adjacent MCS indices at each of the modulation order switching points are corresponding to the same TBS index, based on the indication of whether the higher order modulation is supported. As a result, the higher order modulation is introduced to the wireless communication system and the bit number of indicating the mapping between the MCS indices and the TBS indices can remain the same.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for a network of a wireless communication system, the method comprising:
deciding whether a higher order modulation is supported;
transmitting a signaling to a communication device of the wireless communication system, to indicate whether the higher order modulation is supported; and
selecting a first modulation and transport block size (TBS) index table or a second modulation and TBS index table according to whether the higher order
modulation is supported;
wherein the first modulation and TBS index table and the second modulation and
TBS index table include a plurality of modulation and coding scheme (MCS) indices, and each MCS index is corresponding to a modulation order and a TBS index;
wherein adjacent MCS indices corresponding to different modulation orders in the first modulation and TBS index table are corresponding to the same TBS index;
wherein the adjacent MCS indices corresponding to different modulation orders in the second modulation and TBS index table are corresponding to different TBS indices.

2. The method according to any one of the preceding claims, wherein the step of selecting the first modulation and TBS index table or the second modulation and TBS index table according to whether the higher order modulation is supported comprises:
selecting the first modulation and index table when the higher order modulation is not supported; and
selecting the second modulation and index table when the higher order modulation is supported.

3. The method according to any one of the preceding claims, wherein the network of the wireless communication system decide whether the higher order modulation is supported according to the channel quality between the network and the communication device.

4. The method according to any one of the preceding claims, wherein the higher order modulation is 256 Quadrature Amplitude Modulation (256QAM).

5. The method according to any one of the preceding claims, wherein the number of the MCS indices utilized for retransmission in the first modulation and TBS index table is smaller than the number of the MCS indices utilized for retransmission in the second modulation and TBS index table.

6. The method according to any one of the preceding claims, wherein the number of the modulation orders in the first modulation and TBS index table is smaller than the number of the modulation orders in the second modulation and TBS index table.

7. The method according to any one of the preceding claims, wherein the number of MCS indices in the first modulation and TBS index table and the number of MCS indices in the second modulation and TBS index table are the same.

8. A method for a communication device of a wireless communication system, the method comprising:
receiving a signaling from a network of the wireless communication system, wherein the signaling indicates whether a higher order modulation is supported; and
selecting a first modulation and transport block size (TBS) index table or a second modulation and TBS index table according to the signaling;
wherein the first modulation and TBS index table and the second modulation and TBS index table includes a plurality of modulation and coding scheme (MCS) indices, and each MCS index is corresponding to a modulation order and a TBS index;
wherein adjacent MCS indices corresponding to different modulation orders in the first modulation and TBS index table are corresponding to the same TBS index;
wherein the adjacent MCS indices corresponding to different modulation orders in the second modulation and TBS index table are corresponding to different TBS indices.

9. The method of claim 8, wherein the step of selecting the first modulation and TBS index table or the second modulation and TBS index table according to the signaling comprises:
selecting the first modulation and index table when the signaling indicates the higher order modulation is not supported; and
selecting the second modulation and index table when the signaling indicates the higher order modulation is supported.

10. The method according to any one of the preceding claims 8 or 9, wherein the higher order modulation is 256 Quadrature Amplitude Modulation (256QAM).

11. The method according to any one of the preceding claims 8 to 10, wherein the number of the MCS indices utilized for retransmission in the first modulation and TBS index table is smaller than the number of the MCS indices utilized for retransmission in the second modulation and TBS index table.

12. The method according to any one of the preceding claims 8 to 11, wherein the number of the modulation orders in the first modulation and TBS index table is smaller than the number of the modulation orders in the second modulation and TBS index table.

13. The method according to any one of the preceding claims 8 to 12, wherein the number of MCS indices in the first modulation and TBS index table and the number of MCS indices in the second modulation and TBS index table are the same.

14. A server comprising storage means storing instructions for implementing the method according to claim 1.

15. A communication device comprising storage means storing instructions for implementing the method according to claim 8.
